# EUROPÄISCHE PATENTSCHRIFT

(11) **EP 1 288 088 B1**
(45) Veröffentlichungstag und Bekanntmachung des Hinweises auf die Patenterteilung: **17.08.2005**
(21) Anmeldenummer: 02012756.9
(22) Anmeldetag: 08.06.2002
(51) Int. Cl.: B60S 1/04, B60S 1/34

(54) **Wischeranlage mit einer Platine**
Wiper system with a supporting plate
Système d'essuie-glace avec une platine de support

(30) Priorität: 01.09.2001 DE 10142992
(43) Veröffentlichungstag der Anmeldung: 05.03.2003
(73) Patentinhaber: ROBERT BOSCH GMBH, 70442 Stuttgart (DE)
(72) Erfinder: Zimmer, Joachim, 77880 Sasbach (DE)

(56) Entgegenhaltungen:
- DE-A- 4 409 957
- DE-A- 19 642 666
- US-A- 4 439 887
- PATENT ABSTRACTS OF JAPAN vol. 2000, no. 14, 5. März 2001 (2001-03-05) -& JP 2000 326833 A (MITSUBISHI MOTORS CORP), 28. November 2000 (2000-11-28)

## Beschreibung

### Stand der Technik

Die Erfindung geht von einer Wischeranlage mit einer Platine nach dem Oberbegriff des Anspruchs 1 aus.

Wischeranlagen mit mehreren Scheibenwischern für Kraftfahrzeuge werden mit deren Wischerlagern direkt oder indirekt über eine Platine an der Fahrzeugkarosserie befestigt. Die Platine bzw. eine Rohrplatine - wenn der Wischerträger auch rohrförmige Hohlprofile enthält -, umfasst eine Motorplatine, die einen Wischerantrieb mit einem Wischermotor und einem daran angebauten Getriebe trägt. Eine Abtriebswelle des Getriebes ist in einem Getriebedom gelagert und treibt in der Regel über eine Kurbel und Gelenkstangen weitere Kurbeln an, die mit einer Antriebswelle für jeden Scheibenwischer fest verbunden sind. Die Antriebswellen sind in Wischerlagern gelagert, deren Lagergehäuse an den Enden der Platine befestigt oder angeformt sind.

Aus der DE 19 64 2666 ist eine Rohrplatine bekannt, die zur Lagerung der Antriebswellen mindestens ein rohrförmiges Element aufweist, das an einem Platinenrohr angeformt ist. Es wird durch gegenüberliegende, nach außen weisende ringförmige Kragen in den Mantelflächen des Platinenrohrs gebildet. In das rohrförmige Element ist ein zylindrisches Lagergehäuse aus Kunststoff eingesetzt, welches zur Lagerung der Antriebswelle dient. Das Lagergehäuse wird durch eine Lagerhülse gebildet und ist gegenüber dem rohrförmigen Element drehfest fixiert. Dazu weist das rohrförmige Element vorzugsweise eine von der Kreisform abweichende, insbesondere polygonale oder eine ovale Innenkontur auf und die Lagerhülse eine passende Außenkontur, so dass in Umfangsrichtung ein Formschluss erreicht wird. Zur leichteren Montage besitzt die Lagerhülse nach einer Ausführung in Längsrichtung eine konische Kontur. Die Gestaltung und Dimensionierung des rohrförmigen Elements sind weit gehend durch den Durchmesser des Platinenrohrs bestimmt.

Des weiteren offenbart das Dokument JP-A-2000326833 eine Scheibenwischanlage nach dem Oberbegriff des Anspruchs 1.

### Vorteile der Erfindung

Nach der Erfindung bildet das rohrförmige Element ausgehend von einer ebenen Anlagefläche der Platine eine trichterförmige Mulde mit einer Aufnahmeöffnung, wobei sich der größere Querschnitt der Mulde an die Anlagefläche anschließt und die Mulde in ihren Endbereichen radial und axiale Stützflächen für das Lagergehäuse aufweist. Die Mulde dient zur Aufnahme eines Lagergehäuses, das sich an den Stützflächen abstützt. Die flach bauende Platine ist mit der Mulde als Spritzguss- oder Druckgussteil einfach herzustellen oder kann im Biege- und Tiefziehverfahren auch aus einem ebenen Blech leicht geformt werden. Die Mulde bietet für das Lagergehäuse eine große, den jeweiligen Einbauverhältnissen leicht anzupassende Abstützbasis. Diese beruht zum einen darauf, dass die axiale Stützfläche im Bereich der ebenen Anlagefläche einen großen Durchmesser aufweist und somit bei einer geringen Flächenpressung große Kräfte und Momente aufnehmen kann. Dadurch kann eine große Palette von Kunststoffen für die Fertigung des Lagergehäuses verwendet werden. Außerdem werden die Kräfte auf kurzem Wege vom Lagergehäuse in die Platine geleitet. Zum anderen bietet der axiale Abstand der radialen Stützflächen eine gute Abstützbasis, die je nach den Einbauverhältnissen durch die Tiefe der Mulde modifiziert werden kann. Dabei ist es vorteilhaft, wenn die radialen Stützflächen in axialer Richtung in der Nähe von radialen Lagern der Lagereinheit liegen. So entstehen bei einer Belastung, z.B. bei einer Biegebeanspruchung, keine oder nur geringe Zugkräfte im Lagergehäuse, so dass kaum eine Beschränkung in der Werkstoffwahl besteht.

Gemäß einer weiteren Ausführung können die Wände der Mulde in axialer Richtung zwischen den radialen Stützflächen über den Umfang verteilte Durchbrüche aufweisen, um Material und Gewicht einzusparen.

Das in die Mulde einzusetzende Lagergehäuse besteht im wesentlichen aus einer zylindrischen Lagerhülse, deren eines Ende vom Inneren der Mulde durch die Aufnahmeöffnung am Boden der Mulde gesteckt und mittels eines Montagerings gesichert wird. Der Montagering kann eine Schraubenmutter sein, die auf die Lagerhülse gepresst und/oder geschraubt wird. Er kann auch ein Klemmring sein, z.B. aus Kunststoff, der auf die Lagerhülse aufgepresst wird, wobei zweckmäßigerweise die Lagerhülse im Bereich des Klemmrings am Umfang eine raue Oberfläche besitzt. Bei der Montage wird die Oberfläche geglättet und ergibt einen dauerhaften festen Sitz. Der Montagering stützt sich mit einer Stirnseite an einer axialen Stützfläche der Mulde ab.

Am anderen Ende der Lagerhülse ist ein Kopfteil angeformt. Dieser überdeckt die Mulde an der Seite des größten Querschnitts und greift mit einem Passstück in die Mulde ein, wobei sich das Passstück an der radialen Stützfläche der Mulde abstützt. Der Kopfteil besitzt ferner einen Rand, der über das Passstück radial übersteht, und an der axialen Stützfläche der Platine anliegt. Auf Grund der trichterförmigen Gestalt der Mulde lässt sich das Lagergehäuse leicht montieren. Ferner ergibt sich eine relativ große Differenz zwischen dem größten Durchmesser und dem kleinsten Durchmesser im Bereich der Aufnahmeöffnung. Die Mulde ist daher sehr formstabil und überträgt die Kräfte und Momente günstig von der Aufnahmebohrung in die Platine. Um Material und Gewicht einzusparen und die Fertigung zu vereinfachen, kann die Mulde zwischen den radialen Stützflächen Durchbrüche aufweisen, ohne die Stabilität zu gefährden.

Zur Verstärkung des Lagergehäuses verbinden axial verlaufende Rippen das Passstück und die Lagerhülse. Zweckmäßigerweise reichen die Rippen bis zum Bereich der radialen Stützflächen am anderen Ende der Mulde und nehmen in ihrer Höhe so ab, dass sie einen geringen Abstand zur Mulde haben. Dadurch tragen die Rippen zwar zur Festigkeit der Lagerhülse bei, dienen aber nicht direkt zur Abstützung des Lagergehäuses in der Mulde, das sich ausschließlich über die Abstützflächen an der Platine abstützt.

Das Lagergehäuse ist weit gehend rotationssymmetrisch aufgebaut. Dies erleichtert die Montage durch eine vereinfachte Ausrichtung des Lagergehäuses, z.B. in einem Montageautomaten. Ferner kann sich die vormontierte Lagereinheit über das Lagergehäuse in der trichterförmigen Mulde selbst zentrieren. Der rotationssymmetrische Aufbau des Lagergehäuses begünstigt ferner die Herstellung durch einfache Werkzeuge. Außerdem ergibt sich eine gute Maßhaltigkeit wegen der symmetrischen.Schwindung während eines Spritzgussverfahren.

Das Lagergehäuse mit seinem Kopfteil und den Rippen kann so gestaltet werden, dass es in axialer Richtung oder seitlich aus der Spritzgussform entformt werden kann. Zur axialen Entformung eignet sich eine Gestaltung, bei der der Kopfteil eine kegelstumpfförmige Abschlussfläche besitzt, die an ihrem inneren Ende mit der Lagerhülse verbunden ist und an ihrem äußeren Ende einen Rand bildet. Um das Lagergehäuse seitlich entformen zu können, wird der Kopfteil aus zwei parallel zueinander liegenden, scheibenförmigen Elementen gebildet, von denen das im Durchmesser größere Element mit einer Stirnseite an der Anlagefläche der Platine anliegt, während das andere Element mit seinem Umfang an der radialen Stützfläche der Platine anliegt. Die Rippen, durch die die scheibenförmigen Elemente an der Lagerhülse angebunden sind, umfassen jeweils zwei diametral angeordnete Rippen, während die übrigen Rippen zu der Ebene senkrecht liegen, die durch die zwei diametral angeordneten Rippen vorgegeben ist.

Das Lagergehäuse wird zweckmäßigerweise in der Mulde gegen Verdrehen gesichert, indem z.B. mindestens eine der radialen Stützflächen einen von der Kreisform abweichenden Querschnitt hat, z.B. einen ovalen oder polygonalen Querschnitt. Es besteht auch die Möglichkeit, die Verdrehsicherung durch eine Rippe am Lagergehäuse zu bewirken, die in eine Öffnung oder Vertiefung der Platine eingreift.

Das Lagergehäuse besteht vorzugsweise aus Vollkunststoff und wirkt als Dämpfungselement zwischen der Antriebswelle und der Platine. Gleichzeitig verhindert sie die Kontaktkorrosion zwischen den metallischen Bauteilen, insbesondere zwischen einer Platine aus Leichtmetall, z.B. Magnesium, und Lagerteilen aus Stahl oder metallischen Lagerwerkstoffen. Die Fertigungskosten können zudem weiter gesenkt werden, wenn das Lagergehäuse in großen Stückzahlen gefertigt wird, indem es beispielsweise als Standardbauteil in vielen Wischeranlagen eingebaut wird.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Schnitt durch ein Wischerlager am Ende einer Platine,
- Fig. 2: eine perspektivische Ansicht eines Lagergehäuses von unten,
- Fig. 3: eine Variante zu Fig. 2 in einer perspektivischen Ansicht von oben,
- Fig. 4-6: Varianten zu Fig. 1,
- Fig. 7: eine perspektivische Darstellung einer trichterförmigen Mulde von unten gesehen,
- Fig. 8: eine Variante zu Fig. 7,
- Fig. 9: eine perspektivische Darstellung einer trichterförmigen Mulde von oben gesehen und
- Fig. 10: eine Variante zu Fig. 9.

### Beschreibung der Ausführungsbeispiele

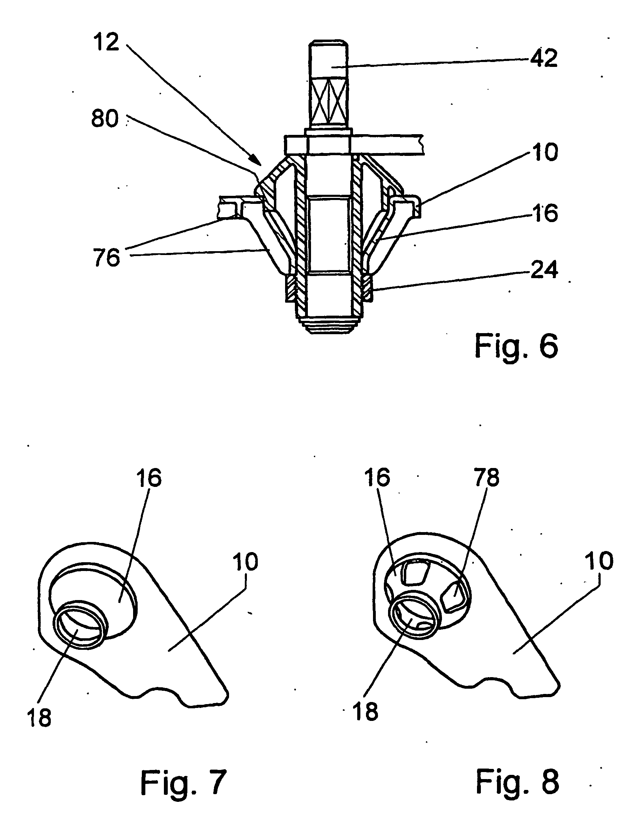

In einer vorwiegend flach gestalteten Platine 10 zum Befestigen einer Wischeranlage an einer Fahrzeugkarosserie sind in den Bereichen von Wischerlagern trichterförmige Mulden 16 vorgesehen, die zur Aufnahme von vormontierten Lagereinheiten 12 dienen. Die Mulden 16 schließen mit ihrem größten Querschnitt an einer ebenen Anlagefläche 14 der Platine 10 an, während an ihrem anderen Ende mit einem geringeren Querschnitt eine Aufnahmeöffnung 18 (Fig. 7) vorgesehen ist. Die Anlagefläche 14 und eine Stirnfläche 24 an der Aufnahmeöffnung 18 bilden axiale Stützflächen für die Lagereinheit 12, während sich eine radiale Stützfläche 20 zum Inneren der Mulde 16 hin an die Anlagefläche 14 und eine weitere radiale Stützfläche 22 an die Stirnfläche 24 anschließen. Die radialen Stützflächen besitzen vorzugsweise Mantellinien, die parallel zu einer Antriebswelle 42 der Lagereinheit 12 verlaufen.

Die Antriebswelle 42 ist mittels Lager 44 in einer Lagerbohrung 62 des Lagergehäuse 26 aus Kunststoff gelagert. Sie wird axial im Lagergehäuse 26 zwischen einer Kurbel 48 und einer Scheibe 58 gehalten, wobei die Kurbel 48 durch ein Sicherungselement 46 und die Scheibe 58 durch einen Sicherungsring 60 auf der Antriebswelle 42 fixiert sind. Der Bereich der Lager 44 wird nach außen durch einen Dichtungsring 50 abgedichtet.

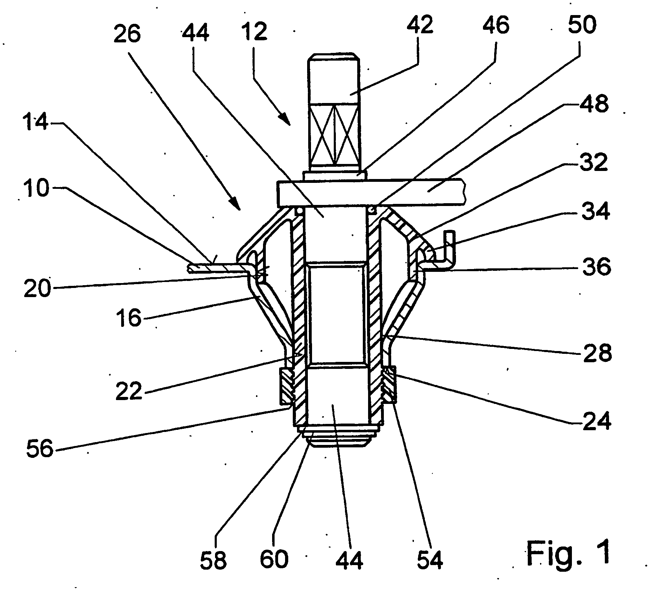

Das Lagergehäuse 26 umfasst im wesentlichen eine zylindrische Lagerhülse 28, die die Lagerbohrung 62 bildet und mit einem Ende durch die Aufnahmeöffnung 18 gesteckt wird. Die Lagerhülse 28 stützt sich am Umfang an der radialen Stützfläche 22 der Mulde 16 ab. Am anderen Ende schließt sich an die Lagerhülse 28 ein Kopfteil 30 an, der den größten Querschnitt der Mulde 16 überdeckt, und mit einem Rand 34 an der Anlagefläche 14 der Platine 10 anliegt. Bei den Ausführungen nach Fig. 1, 2, 6 besitzt der Kopfteil 30 eine kegelstumpfförmige Abschlusswand 32, die sich zwischen dem Rand 34 und einer Stirnseite der Lagerhülse 28 erstreckt. Im Bereich der radialen Stützfläche 20 besitzt der Kopfteil 30 ein Passstück 36, das an die Abschlusswand 32 anschließt, und sich radial am Umfang an der radialen Stützfläche 20 abstützt. Zwischen dem Passstück 36 und der Lagerhülse 28 sind axial verlaufende Rippen 38 angeordnet, während zwischen dem Passstück 36 und dem Rand 34 weitere radial verlaufende Rippen 40 vorgesehen sind. Die Rippen 38 und 40 dienen zur Verstärkung des Lagergehäuses 26, wobei die Rippen 38 zweckmäßigerweise bis nahe an die radialen Stützflächen 22 reichen und der Innenkontur der Mulde 16 mit einem ausreichenden Abstand folgen, so dass das Lagergehäuse 26 sich eindeutig an den dafür bestimmten axialen und radialen Stützflächen 14, 20, 22 und 24 abstützt.

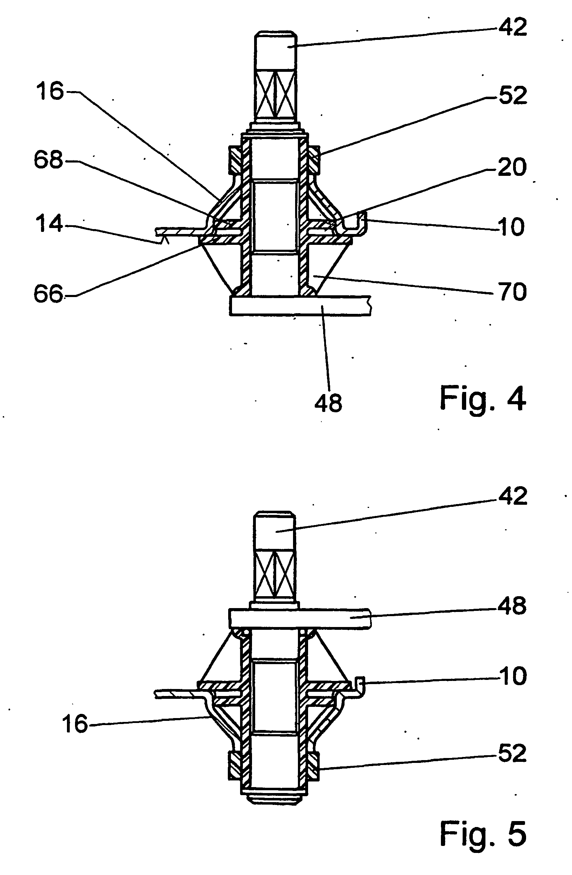

Das Lagergehäuse 26 lässt sich leicht in die trichterförmige Mulde 16 einsetzen, wobei es sich auf Grund seiner weit gehend rotationssymmetrischen Bauweise selbst zentriert. Im Bereich der radialen Stützflächen 20, 22 ist zur spielfreien Kraftaufnahme ein Presssitz vorgesehen. Dazu ist es zweckmäßig, dass das Lagergehäuse 26 in diesen Bereichen eine raue Oberfläche besitzt. Bei der Montage glättet sich die Oberfläche und ergibt einen dauerhaften, festen Sitz. Die montierte Lagereinheit 12 wird in der Mulde 16 durch einen Montagering in Form eines Klemmrings 52 (Fig. 4, Fig. 5) oder in Form einer Schraubenmutter 54 (Fig. 1, Fig. 6) gesichert. Der Klemmring 52 wird mit einem Presssitz auf die Lagerhülse 28 aufgeschoben, wobei es ebenfalls zweckmäßig ist, dass die Lagerhülse 28 im Bereich des Klemmrings 52 eine raue Oberfläche aufweist. Die Schraubenmutter 54 kann auf ein Gewinde 56 der Lagerhülse 28 geschraubt und/oder gepresst werden.
Der Klemmring 52 und die Schraubenmutter 54 stützen sich stirnseitig an der Stirnfläche 24 der Mulde 16 ab.

Die radialen Stützflächen 20 und 22 liegen nahe an den Bereichen der Lager 44, jedoch mit einer Tendenz zu den einander zugewandten Enden der Lager 44 hin. So ergibt sich bei einer guten Abstützbasis eine flach bauende Platine 10, die auch für Wischeranlagen geeignet ist, bei denen ein Wischermotor in der Nähe eines Wischerlagers angeordnet werden muss.

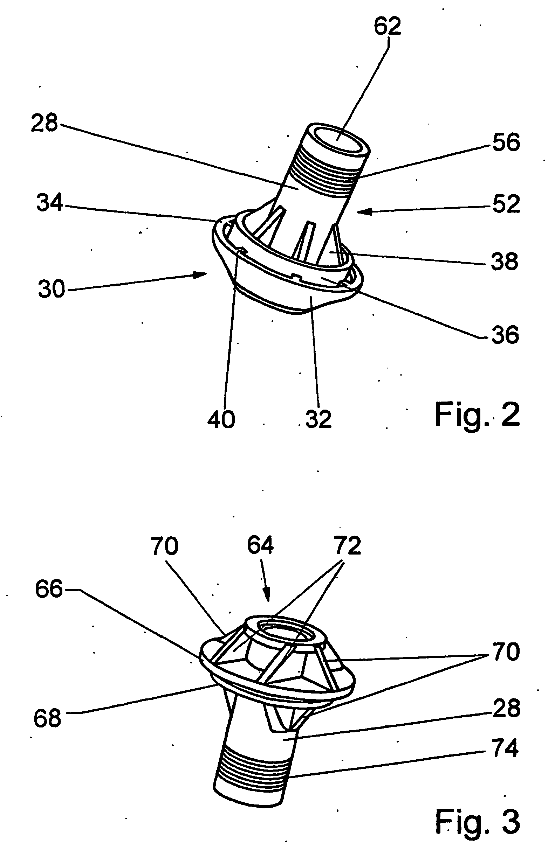

Das Lagergehäuse 2.6 wird zweckmäßigerweise als Spritzgussteil hergestellt. Dabei kann es in der Ausführung nach Fig. 1, Fig. 2 und Fig. 6 in axialer Richtung aus der Spritzgussform entformt werden. In der Ausführung nach Fig. 3, Fig. 4 und Fig. 5 ist der Kopfteil 64 des Lagergehäuses 26 so gestaltet, dass das Lagergehäuse 26 seitlich entformt werden kann. Hierzu besitzt der Kopfteil 64 zwei parallel zu einander verlaufende scheibenförmige Elemente 66 und 68. Während das im Durchmesser größere Element 66 mit einer Stirnseite an der Anlagefläche 14 der Platine 10 anliegt, stützt sich das scheibenförmige Element 68 an seinem Umfang an der radialen Stützfläche 20 der Mulde 16 ab. Die scheibenförmigen Elemente sind zur Verstärkung durch Rippen 70, 72 an die Lagerhülse 28 angebunden. Dabei sind jeweils zwei Rippen 70 diametral zu einer Lagerachse angeordnet, während die übrigen Rippen 72 senkrecht zu einer Ebene verlaufen, die durch die Rippen 70 bestimmt wird. In dem Ausführungsbeispiel nach Fig. 3 verlaufen die Rippen 72 etwa tangenzial zur Lagerhülse 28.

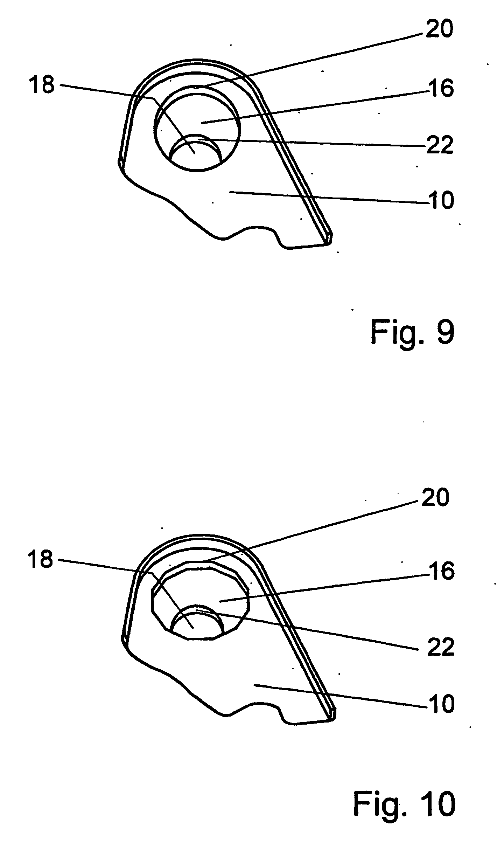

Das Lagergehäuse 26 ist in der Mulde 16 gegen Verdrehen gesichert.. Dies kann dadurch erreicht werden, dass die Mulde 16 und hierbei insbesondere mindestens eine der radialen Stützflächen 20, 22 einen von der Kreisform abweichenden Querschnitt haben. In der Ausführung nach Fig. 9 ist der Querschnitt oval, wohingegen der Querschnitt der radialen Stützfläche 20 bei der Ausführung nach Fig. 10 polygonal ist. Eine weitere Möglichkeit zeigt die Fig. 8, bei der eine Rippe 80 in eine Öffnung oder eine Vertiefung der Platine 10 eingreift. Auf Grund der großen Formstabilität der Mulde 16 können Gewicht und Material eingespart werden, indem die Wände der Mulde 16 zwischen den radialen Stützflächen 20, 22 auf den Umfang verteilte Durchbrüche 78 aufweisen (Fig. 8)

Die Platine 10 kann in einem Spritzguss- oder Druckgussverfahren aus Kunststoff oder Leichtmetall hergestellt werden (Fig. 6), wobei Rippen 76 zur Verstärkung vorgesehen sind. Bei Platinen 10 aus Leichtmetall, insbesondere aus Magnesium, ist es besonders vorteilhaft, dass das Lagergehäuse 26 aus Kunststoff besteht und somit eine Kontaktkorrosion zwischen dem Lagergehäuse 26 und der Platine 10 vermieden wird. Bei den Ausführung nach Fig. 1, Fig. 4, Fig. 5 und Fig. 7 bis 10 ist die Platine 10 als Blechbiegeteil gefertigt, wobei die Mulde 16 im Tiefziehverfahren geformt wird. Die Blechkonstruktion ist besonders für den Einsatz von Kompaktgestängen in Verbindung mit Reversiermotoren geeignet, bei denen sich geringe Abstände zwischen dem Wischermotor und dem Wischerlager ergeben.

Die erfindungsgemäße Lagereinheit 12 lässt viele Kombinationsmöglichkeiten zu. So zeigen die Ausführung nach Fig. 1, Fig. 5 und Fig. 6 eine Anordnung der Kurbel 48 am wischerseitigen Ende der Antriebswelle 42, während bei der Ausführung nach Fig. 4 die Kurbel 48 am anderen Ende der Antriebswelle 42 angebracht ist.

### Bezugszeichen

- 10: Platine
- 12: Lagereinheit
- 14: Anlagefläche
- 16: Mulde
- 18: Aufnahmeöffnung
- 20: radiale Stützfläche
- 22: radiale Stützfläche
- 24: Stirnfläche
- 26: Lagergehäuse
- 28: Lagerhülse
- 30: Kopfteil
- 32: Abschlusswand
- 34: Rand
- 36: Passstück
- 38: Rippe
- 40: Rippe
- 42: Antriebswelle
- 44: Lager
- 46: Sicherungselement
- 48: Kurbel
- 50: Dichtring
- 52: Klemmring
- 54: Schraubenmutter.
- 56: Gewinde
- 58: Scheibe
- 60: Sicherungsring
- 62: Lagerbohrung
- 64: Kopfteil
- 66: scheibenförmiges Element
- 68: scheibenförmiges Element
- 70: Rippe
- 72: Rippe
- 74: Bereich
- 76: Rippe
- 78: Durchbruch
- 80: Rippe

## Patentansprüche

1. Wischeranlage mit einer Platine (10), an der zum Lagern von Antriebswellen (42) mindestens ein rohrförmiges Element (16) angeformt ist, in das eine vormontierte Lagereinheit (12) mit einem Lagergehäuse (26) aus Kunststoff eingesetzt ist, dessen Außenkontur der Innenkontur des rohrförmigen Elements (16) angepasst ist, wobei das rohrförmige Element (16) ausgehend von.einer ebenen Anlagefläche (14) der Platine (10) eine trichterförmige Mulde (16) bildet, deren größter Querschnitt an die Anlagefläche (14) anschließt und die am anderen Ende eine weitere Aufnahmeöffnung (18) für das Lagergehäuse (26) hat **dadurch gekennzeichnet, dass** die Mulde (16) nur in ihren Endbereichen axiale und radiale Stützflächen (14, 36; 20, 22,) für das Lagergehäuse (24) aufweist.

2. Wischeranlage nach Anspruch 1, **dadurch gekennzeichnet, dass** die radialen Stützflächen (20, 22) in axialer Richtung in der Nähe von radialen Lagern (44) der Lagereinheit (12) liegen und ihre Mantellinien parallel zur Antriebswelle (42) verlaufen.

3. Wischeranlage nach einem der vorhergehenden Ansprüche, **dadurch gekennzeichnet, dass** mindestens eine radiale Stützfläche (20, 22) einen von der Kreisform abweichenden Querschnitt hat.

4. Wischeranlage nach einem der Ansprüche 1 oder 2, **dadurch gekennzeichnet, dass** das Lagergehäuse (26) mit einer Rippe (80) in eine Öffnung oder Vertiefung der Platine (10) eingreift.

5. Wischeranlage nach einem der vorhergehenden Ansprüche, **dadurch gekennzeichnet, dass** die Mulde (16) über den Umfang verteilte Durchbrüche (78) aufweist.

6. Wischeranlage nach einem der vorhergehenden Ansprüche, **dadurch gekennzeichnet, dass** das Lagergehäuse (26) aus einer im Wesentlichen zylindrischen Lagerhülse (28) besteht, deren eines Ende durch die Aufnahmeöffnung (18) gesteckt und mittels eines Montagerings (52, 54) gesichert wird, der mit einer Stirnfläche an der axialen Stützfläche (24) zur Anlage kommt, während am anderen Ende der Lagerhülse (28) ein Kopfteil (30, 64) angeformt ist, das die Mulde (16) überdeckt und mit einem ringförmigen Passstück (36) in die Mulde (16) eingreift, wobei das Passstück (36) an der radialen Stützfläche (20) und ein radial überstehender Rand (34) des Kopfteils (30) an der axialen Stützfläche (14) anliegen.

7. Wischeranlage nach Anspruch 6, **dadurch gekennzeichnet, dass** axial verlaufende Rippen (38) das Passstück (36) und die Lagerhülse (28) verbinden.

8. Wischeranlage nach Anspruch 7, **dadurch gekennzeichnet, dass** die Rippen (38) bis zum Bereich der radialen Stützflächen (22) am anderen Ende der Mulde (16) reichen und dass ihre Höhe so abnimmt, dass sie einen Abstand zur Innenfläche der Mulde (16) haben.

9. Wischeranlage nach einem der Ansprüche 6 bis 8, **dadurch gekennzeichnet, dass** zwischen dem Rand (34) und dem Passstück (36) außerhalb der Stützflächen (20) axial verlaufende Rippen (40) vorgesehen sind.

10. Wischeranlage nach einem der Ansprüche 6 bis 9, **dadurch gekennzeichnet, dass** der Montagering (54) eine Schraubenmutter ist, die auf einem gespritzten Gewinde (56) am Umfang der Lagerhülse (28) sitzt.

11. Wischeranlage nach einem der Ansprüche 6 bis 9, **dadurch gekennzeichnet, dass** der Montagering (52)ein Klemmring ist, der auf der Lagerhülse (28) in einer Zone (74) mit einer rauen Oberfläche sitzt.

12. Wischeranlage nach einem der Ansprüche 6 bis 11, **dadurch gekennzeichnet, dass** der Kopfteil (30) eine kegelstumpfförmige Abschlusswand (32) besitzt.

13. Wischeranlage nach einem der Ansprüche 6 bis 11, **dadurch gekennzeichnet, dass** der Kopfteil (64) durch zwei scheibenförmige Elemente (48, 50) gebildet ist, von denen ein scheibenförmiges Element (48) mit einer Stirnseite an der Anlagefläche (14) anliegt, während das andere scheibenförmige Element (50) mit seinem Umfang an der radialen Stützfläche (20) anliegt, und die durch Rippen (70, 72) an der Lagerhülse (28) angebunden sind, wobei jeweils zwei Rippen (70) diametral angeordnet sind, während die übrigen Rippen (72) zu der Ebene senkrecht liegen, die durch die zwei diametral angeordneten Rippen (70) vorgegeben ist.

14. Wischeranlage nach einem der vorhergehenden Ansprüche, **dadurch gekennzeichnet, dass** das Lagergehäuse (24) im Bereich der radialen Stützflächen (20, 22) eine raue Oberfläche besitzt.

## Claims

1. Wiper system with a supporting plate (10) on which is integrally formed, for the mounting of drive shafts (42), at least one tubular element (16) into which a preassembled bearing unit (12) with a plastic bearing housing (26), the external contour of which is matched to the internal contour of the tubular element (16), is inserted, the tubular element (16), starting from a planar bearing surface (14) of the supporting plate (10), forming a funnel-shaped trough (16), the largest cross section of which adjoins the bearing surface (14) and which has at the other end a further receiving opening (18) for the bearing housing (26), **characterized in that** the trough (16) has, only in its end regions, axial and radial supporting surfaces (14, 36; 20, 22) for the bearing housing (24).

2. Wiper system according to Claim 1, **characterized in that** the radial supporting surfaces (20, 22) lie in the axial direction in the vicinity of radial bearings (44) of the bearing unit (12) and their circumferential lines run parallel to the drive shaft (42).

3. Wiper system according to one of the preceding claims, **characterized in that** at least one radial supporting surface (20, 22) has a cross section deviating from the circular form.

4. Wiper system according to either of Claims 1 or 2, **characterized in that** the bearing housing (26) engages with a rib (80) into an opening or depression of the supporting plate (10).

5. Wiper system according to one of the preceding claims, **characterized in that** the trough (16) has apertures (78) distributed over the circumference.

6. Wiper system according to one of the preceding claims, **characterized in that** the bearing housing (26) comprises an essentially cylindrical bearing sleeve (28), one end of which is inserted through the receiving opening (18) and is secured by means of a mounting ring (52, 54) which comes to bear with an end surface against the axial supporting surface (24) while a head part (30, 64), which covers the trough (16) and engages with an annular fitting piece (36) into the trough (16), is integrally formed at the other end of the bearing sleeve (28), the fitting piece (36) bearing against the radial supporting surface (20) and a radially protruding edge (34) of the head part (30) bearing against the axial supporting surface (14).

7. Wiper system according to Claim 6, **characterized in that** ribs (38) running axially connect the fitting piece (36) and the bearing sleeve (28).

8. Wiper system according to Claim 7, **characterized in that** the ribs (38) reach as far as the region of the radial supporting surfaces (22) at the other end of the trough (16) and **in that** their height decreases in such a manner that they are at a distance from the inner surface of the trough (16).

9. Wiper system according to Claims 6 to 8, **characterized in that** ribs (40) running axially are provided between the edge (34) and the fitting piece (36) outside the supporting surfaces (20).

10. Wiper system according to one of Claims 6 to 9, **characterized in that** the mounting ring (54) is a screw nut which sits on an injected thread (56) on the circumference of the bearing sleeve (28).

11. Wiper system according to one of Claims 6 to 9, **characterized in that** the mounting ring (52) is a clamping ring which sits on the bearing sleeve (28) in a zone (74) having a rough surface.

12. Wiper system according to one of Claims 6 to 11, **characterized in that** the head part (30) has a frustoconical end wall (32).

13. Wiper system according to one of Claims 6 to 11, **characterized in that** the head part (64) is formed by two disc-shaped elements (48, 50), of which one disc-shaped element (48) bears with an end side against the bearing surface (14) while the other disc-shaped element (50) bears with its circumference against the radial supporting surface (20), and the said disc-shaped elements are connected to the bearing sleeve (28) by means of ribs (70, 72), two ribs (70) in each case being arranged diametrically while the remaining ribs (72) lie perpendicularly with respect to the plane which is predetermined by the two diametrically arranged ribs (70).

14. Wiper system according to one of the preceding claims, **characterized in that** the bearing housing (24) has a rough surface in the region of the radial supporting surfaces (20, 22).

## Revendications

1. Système d'essuie-glace avec une platine (10) sur laquelle est formé, pour le montage d'un arbre d'entraînement (42), au moins un élément tubulaire (16) dans lequel est insérée une unité de palier (12) prémontée, présentant un boîtier de palier (26) en matière plastique dont le contour externe est ajusté au contour interne de l'élément tubulaire (16) qui forme, partant d'une portée d'appui plane (14) de la platine (10), une cuvette (16) dont la plus grande section se raccorde à la portée d'appui (14) et qui présente à son autre extrémité une autre ouverture d'accueil (18) pour le palier de boîtier (26),
**caractérisé en ce que**
la cuvette (16) présente seulement dans ses zones d'extrémité des portées axiales et radiales de soutien (14, 36 ; 20, 22) pour le palier de boîtier (24).

2. Système d'essuie-glace selon la revendication 1,
**caractérisé en ce que**
les portées radiales de soutien (20, 22) sont, en direction axiale, proches des paliers radiaux (44) de l'unité de palier (12) et leurs génératrices sont parallèles à l'arbre d'entraînement (42).

3. Système d'essuie-glace selon la revendication 1 ou 2,
**caractérisé en ce qu'**
au moins une portée radiale de soutien (20, 22) présente une section qui s'écarte de la forme circulaire.

4. Système d'essuie-glace selon la revendication 1 ou 2,
**caractérisé en ce que**
le palier de boîtier (26) est engagé par une nervure (80) dans une ouverture ou une cavité de la platine (10).

5. Système d'essuie-glace selon une des revendications précédentes,
**caractérisé en ce que**
la cuvette (16) présente des ouvertures (78) réparties sur sa périphérie.

6. Système d'essuie-glace selon une des revendications précédentes,
**caractérisé en ce que**
le boîtier de palier (26) est constitué d'une douille de palier (28) essentiellement cylindrique, dont une extrémité est emmanchée dans l'ouverture (18) où elle est sécurisée au moyen d'une bague de montage (52, 54) qui vient en appui par une portée frontale sur la portée axiale de soutien (24), tandis qu'à l'autre extrémité de la douille de palier (28) est moulée une partie de tête (30, 64) qui recouvre la cuvette (16) et qui est engagée dans celle-ci par une pièce d'ajustage (36) de forme annulaire, cette pièce d'ajustage (36) étant appliquée sur la portée radiale de soutien (20), tandis qu'un bord (34), faisant saillie radialement, de la partie de tête (30) est appliqué sur la portée axiale de soutien (14).

7. Système d'essuie-glace selon la revendication 6,
**caractérisé en ce que**
des nervures (38) disposées axialement relient la pièce d'ajustage (36) et la douille de palier (28).

8. Système d'essuie-glace selon la revendication 7,
**caractérisé en ce que**
les nervures (38) s'étendent jusqu'à la zone des portées radiales de soutien (22) située à l'autre extrémité de la cuvette (16) et leur hauteur diminue de sorte qu'elles sont écartées de la surface interne de la cuvette (16).

9. Système d'essuie-glace selon une des revendications 6 à 8,
**caractérisé en ce qu'**
entre le bord (34) et la pièce d'ajustage (36), sont prévues à l'extérieur des portées de soutien (20), des nervures (40) disposées axialement.

10. Système d'essuie-glace selon une des revendications 6 à 9,
**caractérisé en ce que**
la bague de montage (54) est un écrou fileté qui est monté sur un filetage (56) injecté à la périphérie de la douille de palier (28).

11. Système d'essuie-glace selon une des revendications 6 à 9,
**caractérisé en ce que**
la bague de montage (52) est une bague de serrage qui est montée sur la douille de palier (28) dans une zone (74) présentant une surface rugueuse.

12. Système d'essuie-glace selon une des revendications 6 à 11,
**caractérisé en ce que**
la partie de tête (30) possède une paroi de fermeture (32) en forme de tronc de cône.

13. Système d'essuie-glace selon une des revendications 6 à 11,
**caractérisé en ce que**
la partie de tête (64) est constituée par deux éléments (48, 50) en forme de disques, dont l'un (48) est appliqué par une face frontale sur la portée d'appui (14) tandis que l'autre (50) est appliqué par sa périphérie sur la portée radiale de soutien (20), ces éléments (48, 50) étant reliés à la douille de palier (28) par des nervures (70, 72) dont deux (70) sont diamétralement opposées, tandis que les autres nervures (72) sont perpendiculaires au plan défini par les deux nervures opposées (70).

14. Système d'essuie-glace selon une des revendications précédentes,
**caractérisé en ce que**
le boîtier de palier (24) présente une surface rugueuse dans la zone des portées radiales de soutien (20, 22).
